(19) Europäisches Patentamt
European Patent Office
Office européen des brevets

(11) **EP 2 511 977 A1**

(12) **DEMANDE DE BREVET EUROPEEN**

(43) Date de publication:
**17.10.2012 Bulletin 2012/42**

(51) Int Cl.:
***H01Q 1/22*** (2006.01)

(21) Numéro de dépôt: **11305454.8**

(22) Date de dépôt: **15.04.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Gemalto SA**
**92190 Meudon (FR)**

(72) Inventeurs:
• **Caruana, Jean-Paul**
 **83500 Marseille (FR)**
• **Capomaggio, Grégory**
 **13360 Roquevaire (FR)**
• **Buton, Christophe**
 **13420 Gemenos (FR)**

(54) **Agencement d'antennes émettrice et réceptrice de champ électromagnétique**

(57)    La présente invention concerne un procédé pour minimiser un courant perturbateur induit dans une antenne réceptrice (7) de champ électromagnétique, ledit champ étant généré par une antenne émettrice (8) située à proximité de ladite antenne réceptrice ;

Le procédé se distingue en ce que l'antenne réceptrice (7) est agencée par rapport à l'antenne émettrice (8) de manière que ledit courant induit s'annule au moins en partie dans l'antenne réceptrice.

L'invention concerne également un agencement d'antennes et dispositif la comportant.

**Fig. 12**

EP 2 511 977 A1

**Description**

Domaine de l'invention.

L'invention concerne un procédé pour minimiser un courant perturbateur induit dans une antenne réceptrice de champ électromagnétique par une antenne émettrice à proximité, un agencement d'antennes et dispositif mettant en oeuvre le procédé.

Elle vise en particulier un dispositif de communication sans contact activée.

Elle vise notamment à spécifier les caractéristiques des signaux, des antennes et principe de cette nouvelle façon d'utiliser la technologie sans contact. La communication radiofréquence est en principe de courte portée et effectuée par couplage et induction électromagnétique de portée de l'ordre de 0,01 voire 1 m.

Elle trouve notamment application dans des objets portables électroniques par exemple des cartes à mémoire telles que de type SD (de la société Sandisk), des montres communicantes.

De telles cartes sont actuellement utilisées dans une interface carte de téléphones portables pour effectuer une transaction de type sans contact répondant notamment à la norme ISO/IEC 14443 ou 15693, dans la mesure où ces téléphones sont dépourvus d'interface sans contact en sortie d'usine.

Art antérieur.

La technologie actuelle ISO/IEC 14443 et NFC (acronyme anglais de « Near Field communication » : communication radiofréquence de proximité) est basée sur un principe de rétro modulation d'un signal émis par un lecteur.

Selon ce principe, une certaine quantité de champ électromagnétique fournie par un lecteur, doit être modulée par l'objet à puce sans contact de proximité également appelé PICC (acronyme anglais de Proximity Integrated Circuit Card). Afin d'être conforme à la sensibilité du lecteur, une amplitude minimale de champ est requise pour être modulée par l'objet. Cette modulation de la porteuse de lecteur doit générer deux bandes latérales avec une amplitude au moins égale à $H/2^{0.5}$. Pour remplir cette condition, il est nécessaire d'avoir un minimum de couplage entre le lecteur et l'objet pour générer suffisamment de signal de porteur. Le facteur de couplage est directement dépendant des surfaces de l'antenne du lecteur et de celle de l'objet sans contact.

Dans le cas de très petit objet sans contact : par exemple, une carte micro SD, la surface de l'antenne radiofréquence est radicalement trop petite. En outre, ce genre d'objet destiné à être incorporé dans un dispositif hôte tel un téléphone portable. Cette dernière opération réduit encore plus le couplage de l'objet sans contact avec le lecteur à cause de l'environnement métallique du téléphone.

Le brevet EP1801741 (B1) décrit un procédé de génération d'un champ électromagnétique propre par un support de données portable (transpondeur), dans lequel la transmission de données à un lecteur s'effectue dans un mode de communication activée et dans lequel la transmission de champ électromagnétique propre de l'objet est vue par le lecteur comme une modulation du champ du lecteur. Toutefois, cette solution ne semble pas être décrite complètement ou ne pas fonctionner correctement comme décrit.

En outre, l'enseignement de ce brevet est très compliqué. Sa mise en oeuvre nécessite plus de composants électroniques, notamment des filtres, un oscillateur, un composant NFC. En outre, les contrôleurs NFC actuels requièrent deux antennes, l'une étant dédiée à la récupération d'énergie et l'autre étant dédiée à l'émission/réception de données.

On connait également un moyen permettant d'éviter une perturbation mutuelle entre antennes consistant à désactiver l'antenne de réception non utilisée lors de l'émission par l'antenne émettrice.

Ce dernier cas se révèle particulièrement compliqué à gérer, puisque l'objet en question doit synchroniser sa réponse, aussi bien en fréquence qu'en phase, sur le signal émis par le lecteur. Ici, le signal de réception étant momentanément désactivé, l'objet en question doit mettre en oeuvre des dispositifs électroniques complexes, coûteux et difficilement intégrables dans des facteurs de forme réduits, afin de compenser cette perte de synchronisation, comme par exemple des dispositifs de boucle à verrouillage de phase, plus connu sous l'acronyme anglais de PLL.

L'invention a pour but de trouver une solution plus aisée et avantageuse pour mettre en oeuvre une émission dans des objets notamment de taille réduite dans lesquels deux antennes distinctes peuvent avoir des inductions mutuelles perturbatrices.

Résumé de l'invention.

A cet effet, l'invention a donc pour objet un procédé pour minimiser un courant perturbateur induit dans une antenne réceptrice de champ électromagnétique, ledit champ étant généré par une antenne émettrice située à proximité de ladite antenne réceptrice ; Le procédé se distingue en ce que l'antenne réceptrice est agencée par rapport à l'antenne émettrice de manière que ledit courant induit s'annule au moins en partie dans l'antenne réceptrice.

Selon d'autres caractéristiques du procédé :

- Lesdites antennes sont agencées entre elles en étant partiellement en regard l'une de l'autre sur deux plans horizontaux sensiblement parallèles ;
- Les antennes se chevauchent, la moitié environ de la surface de couplage de l'antenne réceptrice recouvrant sensiblement la surface de couplage de l'antenne émettrice ;
- L'antenne réceptrice chevauche l'antenne émettrice de manière que le courant induit dans l'antenne réceptrice généré par un flux produit à l'intérieur de l'antenne émettrice soit sensiblement égal au courant contraire induit dans l'antenne réceptrice généré par un flux de sens opposé produit à l'extérieur de l'antenne émettrice et reçu par une portion d'antenne réceptrice située à l'extérieur de l'antenne émettrice ;

L'invention a également pour objet un agencement d'antennes émettrice et réceptrice de champ électromagnétique, lesdites antennes étant disposées à proximité l'une de l'autre ;

L'agencement se distingue en ce que l'antenne réceptrice est agencée par rapport à l'antenne émettrice de manière que le courant induit par l'antenne émettrice dans l'antenne réceptrice s'annule sensiblement au moins en majeure partie ou en quasi totalité.

Ainsi, l'invention peut annuler l'induction en partie par exemple supérieure à 60 %, 80 % ou 90 %.

Selon d'autres caractéristiques :

- Les antennes sont agencées de manière que le flux électromagnétique de l'antenne émettrice traverse une première partie de surface de couplage de l'antenne émettrice dans un sens et un flux opposé traverse une seconde partie de la surface de couplage de l'antenne réceptrice dans un sens opposé ;
- Les antennes sont disposées sur une même face d'un support ou sur des faces opposées ;
- l'une des antennes chevauche l'autre sur la moitié de sa surface de couplage.

L'invention a également pour objet un dispositif de communication radiofréquence mettant en oeuvre le procédé ci-dessus ou comprenant l'agencement d'antennes ci-dessus.

En particulier, dans le cas d'une communication du type sans-contact activée, le dispositif comprenant des moyens de réception et d'émission d'un champ électromagnétique véhiculant des données l'émission étant synchronisée avec ladite réception ; Le dispositif se distingue en une première antenne de réception de données et une seconde antenne d'émission de données sont agencées conformément à l'agencement ci-dessus.

Le dispositif peut être intégré dans ou constituer un objet ayant un facteur de forme d'une carte à circuit intégré ou carte de type micro SD ou une montre.

Grâce à l'invention on réalise un bon couplage entre notamment un lecteur et un objet de type PICC (carte SD) ; En outre, il est facile à mettre en oeuvre avec un minimum de modification ; L'invention s'applique notamment à toute puce à interface duale habituelle (avec ou sans oscillateur).

Brève description des figures.

- La figure 1 illustre une carte de type SD comprenant le circuit conforme à un mode de réalisation de l'invention ;
- La figure 2 illustre une vue plus détaillée du circuit radiofréquence RF de la figure précédente ;
- La figure 3A illustre un premier mode de réalisation d'un étage de réception de la figure 2 ;
- La figure 3B illustre un second mode de réalisation d'un étage de réception de la figure 2 ;
- La figure 4 illustre un mode de réalisation d'un étage d'émission de la figure 2 ;
- Les figures 5 et 6 illustrent une antenne de réception agencée par rapport à une carte micro SD et des valeurs de circuit équivalents de l'antenne ;
- La figure 7 illustre le niveau de modulation par le composant radiofréquence SE (5) ;
- La figure 8 illustre un filtre d'extraction du signal de réponse du composant 5 à partir de la porteuse de la figure précédente ;
- La figure 9 illustre un circuit de combinaison de la porteuse et du signal de réponse seul ;
- La figure 10 illustre un circuit LC relatif à l'antenne d'émission ;
- La figure 11 illustre des valeurs des réactances $X_L$ et $X_C$ à partir respectivement de l'inductance et de la capacité en fonction de la fréquence ;
- La figure 12 illustre un agencement d'une antenne d'émission par rapport à une carte micro SD et un agencement des deux antennes entre elles.

Description détaillée.

Par communication activée, on entend une communication sans contact dans laquelle la réponse d'un transpondeur s'effectue par émission d'un champ électromagnétique propre au transpondeur, de préférence amplifié. Cette émission est en fait obtenue par l'émission à une puissance déterminée d'un signal porteur modulé par un signal du transpondeur.

L'énergie de l'amplification et/ou de fonctionnement du transpondeur émetteur / récepteur est de préférence fournie par une source d'énergie externe distincte du lecteur.

Typiquement, la communication ou le circuit sans contact sont conformes à la norme ISO/IEC 14443 et/ou ISO/IEC 15693 ou tout autre protocole s'appuyant sur une fréquence d'excitation du champ électromagnétique à 13.56 MHz. Le circuit est alimenté par une source de courant.

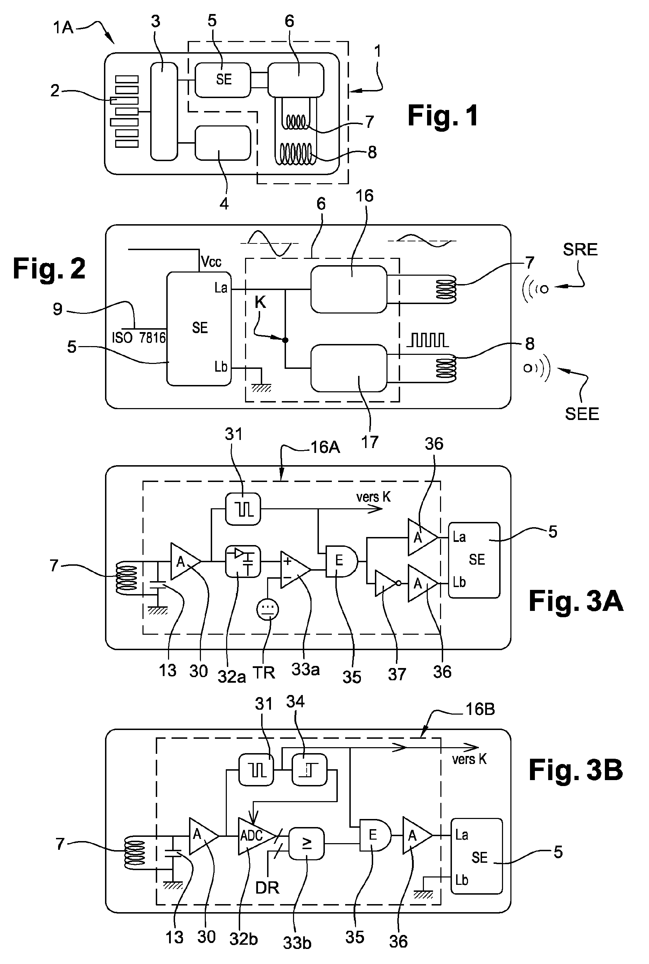

A la figure 1 est schématisé un exemple de réalisation d'un circuit de communication sans contact 1 conforme à l'invention équipant une carte à mémoire 1A. Toutefois, tout autre objet communiquant peut à priori en être équipé, par exemple, clé USB, carte PCMCIA... téléphone, PDA, ordinateur.

L'objet peut ou non être amovible par rapport à un dispositif hôte ou y être fixé à demeure notamment soudé sur une carte à circuit imprimé. Le circuit ou l'objet peut le cas échéant prévoir des connexions d'antenne externes plutôt que de les supporter.

La carte à mémoire 1 comprend de manière connue des plots de contact 2, un microcontrôleur 3, une mémoire de masse 4 (NAND) reliée au microcontrôleur. La carte comprend en outre un élément de traitement de communication 5 ; Il est de préférence de type à interface duale (configuré pour gérer une communication de type contact, par exemple ISO 7816-3 et sans contact ISO-14443 (SE)); Ce composant ou élément 5 (SE) est de préférence sécurisé comme une puce de circuit intégré connue du domaine de la carte à puce ; Il peut être doté, le cas échéant de fonctionnalités cryptographique et/ou anti-fraude, anti-intrusion, etc.

Le composant SE est relié au microcontrôleur 3 par un port d'entrée/sortie ; Le composant de sécurité SE est connecté à un circuit 6 d'interface CL actif ; Ce composant 6 reçoit deux antennes 7, 8, respectivement de réception et d'émission.

Dans son principe, on observe que l'invention comprend des moyens RF supplémentaires 6, 7, 8 ajoutés à l'élément sans contact SE afin de compenser la taille particulièrement réduite de l'antenne puisque logée dans une carte micro SD (11×15 mm) ou mini SD ou dans un objet d'encombrement sensiblement équivalent.

Selon une caractéristique d'un mode de réalisation de l'invention, les moyens d'émission 5, 6, 7, 8 sont configurés pour moduler un signal porteur 25. Ce signal porteur est ici de préférence dérivé ou extrait du champ magnétique reçu d'un lecteur externe.

Dans l'exemple, le circuit radiofréquence 6 réalise des activités fonctionnelles de réception et d'émission du champ électromagnétique ci-après ; Il capte notamment le champ radiofréquence RF externe provenant d'un lecteur sans contact pour, si nécessaire, le rendre compatible au composant sécurisé SE (tension, etc.) ; Il amplifie la réponse de l'élément sécurisé SE destinée à être écoutée par le lecteur externe.

La figure 2 décrit plus en détail le composant SE (5) et ses liaisons. Le circuit SE de ce mode comprend des moyens de connexion à une source d'énergie externe.

Dans l'exemple, le composant SE comprend une interface à contact, par exemple conforme au standard ISO-7816 symbolisé par un faisceau de connexions 9 ; il comprend un plot d'alimentation Vcc, et des plots La, Lb reliés respectivement à une interface active 6 et à la masse. Le composant SE est configuré pour moduler une charge d'impédance en réponse à une réception des trames sans contact reçues sur ses plots La, Lb.

L'interface active 6 comprend un circuit 16 de conditionnement du signal de réception SRE et un circuit 17 générateur de pulses pour émettre un signal d'émission SEE. Chaque circuit 16, 17 est relié au plot (La) du composant de traitement 5.

Conformément à un mode de réalisation de l'invention, les moyens d'émission 5, 17 sont configurés pour moduler un signal porteur. Le signal porteur résulte de préférence d'une dérivation ou extraction du champ magnétique reçu SRE.

Horloge et réception des données.

Selon un mode de mise en oeuvre, le procédé comprend une étape de réception de la fréquence porteuse générée par le lecteur ; La fréquence porteuse est reçue par une antenne de réception dédiée 7. L'antenne 7 reçoit en fait le champ électromagnétique émis par le lecteur comprenant la fréquence porteuse modulée. La fréquence est dans l'exemple de 13,56 MHz mais elle pourrait être tout autre selon le type de communication ou protocole s'appuyant sur cette fréquence de 13.56 MHz de courte ou moyenne portée inférieure notamment à 10 m, 1 m ou 0,1 m voire même proche de 0.

Toutefois, l'invention n'exclut pas de générer un signal porteur autrement par exemple à partir d'un signal d'horloge ou signal interne d'un dispositif hôte ou de l'objet.

Cette étape de réception a également pour objectif de collecter les données envoyées par le lecteur à l'objet sans contact. Un étage électronique comprenant un circuit de réception dédié peut être élaboré dans ce but notamment pour adapter la tension.

Le procédé peut également mettre en oeuvre une étape d'adaptation à travers un étage d'adaptation de réception (16) pour adapter le signal de réception SRE à la puce 5 ; Le procédé peut cumulativement ou alternativement effectuer dans cet étage une extraction d'un signal de porteuse synchronisée 25 du signal de réception SRE.

A la figure 3A est illustré un premier mode de réalisation 16B détaillé de l'étage 16. L'étage de réception 16A comprend l'antenne de réception 7 ici relié au plot 'La' de la puce via un circuit de réception décrit ci-après.

Le signal reçu par cet antenne peut être amplifié avant extraction du signal d'horloge correspondant au signal de la porteuse ; A cet effet, le circuit comprend un amplificateur 30 relié à l'antenne et à la sortie de cet amplificateur est relié un extracteur d'horloge 31 ;

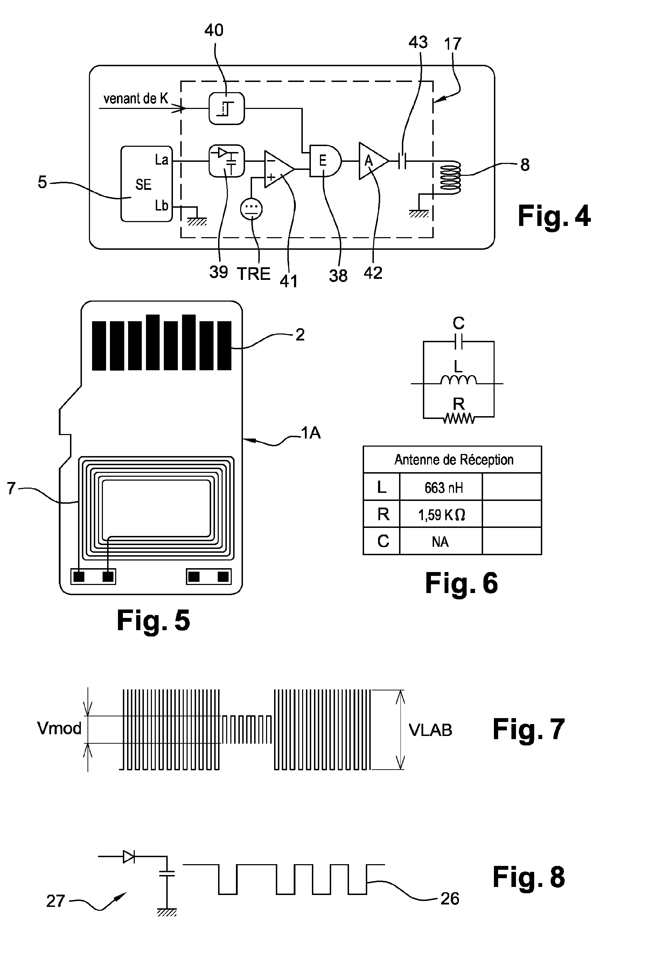

Le signal d'horloge obtenu 25 en sortie de l'extracteur est envoyé par une liaison (K) sur un circuit générateur de pulse ou étage d'adaptation d'émission 17 détaillé à la figure 4. La sortie de l'extracteur d'horloge 31 est par ailleurs également reliée à un circuit logique 35 réalisant une fonction « ET ».

L'étage 16A comprend ici également un démodulateur 32a recevant le signal de réception SRE amplifié par l'amplificateur 30 relié à un circuit de comparaison 33a pour comparer le signal obtenu démodulé à une tension de référence (TR).

Ensuite, le signal de sortie du comparateur 33a est combiné avec le signal d'horloge 25 venant de l'extracteur d'horloge 31 au niveau d'un composant 35 réalisant une fonction 'ET' logique ; Une première branche de la sortie du composant 35 peut passer par un amplificateur 36 avant d'être injecté dans le plot 'La' de la puce 5.

Une seconde branche de la sortie du composant 35 peut passer par un inverseur puis un amplificateur 36 avant d'être branché sur le plot 'Lb' de la puce.

A la figure 3B est illustré un second mode de réalisation 16B de cet étage 16 et dans lequel le composant 5 utilisé est encore une puce à interface duale contact et sans-contact (combi). Les mêmes numéros d'une figure à l'autre représentent des éléments identiques ou sensiblement similaires.

Dans cette variante, le circuit d'extraction d'horloge 31 se connecte également à un déphaseur 34 avant d'agir sur le convertisseur analogique/ numérique 32b.

L'étage ou circuit de réception 16B est d'une part branché à l'antenne de réception 7 reliée ici au plot 'La' de la puce. Le circuit 16B peut comprendre un condensateur 13 disposé aux bornes des plots 'La' et 'Lb' de la puce. Cette capacité permet d'avoir un bon facteur de qualité. Le circuit résonant de l'antenne de réception est réalisé sur le principe d'un circuit parallèle.

A la différence avec le circuit 16A, le démodulateur 32a est remplacé par un convertisseur analogique/digital 32b, le comparateur 33a est remplacé par un comparateur digital 33b avec une valeur digitale de référence (DR) et le plot 'Lb' est branché à la masse au lieu de recevoir le signal de sortie de circuit « ET » inversé et amplifié respectivement par un inverseur 37 et un amplificateur 36.

En outre, ce circuit comprend un déphaseur 34 sur une branche de sortie de l'extracteur d'horloge 31. Ce déphaseur se branche ensuite sur le convertisseur analogique/numérique 32b.

Ainsi, ces étages 16A ou 16B permettent chacun d'extraire le signal d'horloge 25 et d'adapter le signal à la puce 5. Après réception et amplification, le signal porteur est dirigé sur l'entrée RF de la puce Combi 5 en utilisant les plots d'interface La / Lb. Un condensateur supplémentaire 18 peut être ajouté à l'interface afin d'adapter l'impédance d'entrée.

Les étages électroniques 16A et 16B fonctionnent de la manière ci-après :

Le signal SRE reçu par l'antenne 7 peut être assez faible compte tenu de la petite surface de couplage de l'antenne 7 dans un support tel qu'une mini carte SD.

Ce signal est amplifié par l'amplificateur 30 avant d'être démodulé par le démodulateur 32a ou convertisseur analogique/numérique 32b ; Un signal utile extrait et calibré par le comparateur est combiné par la porte (ET) 35 avec le signal d'horloge extrait par l'extracteur d'horloge 31. En sortie de la porte 35, le signal radiofréquence reconditionné est injecté dans le composant 5 en étant au préalable amplifié en mode différentiel grâce à l'inverseur 37 et aux amplificateurs 36.

Parallèlement, l'alimentation Vcc de la puce côté contact ISO 7816 peut être désactivée par un circuit adéquat (non représenté) pendant la présence d'un champ électromagnétique SRE. Ce dernier circuit peut être compris dans le circuit 16A ou 16B. L'actionnement peut être manuel.

Ces derniers peuvent avoir de préférence leurs composants (30, 36, 32a...) alimentés en tension par une alimentation provenant des contacts 2 en relation avec un dispositif hôte.

Le circuit 16B fonctionne sensiblement pareil ; Toutefois le déphaseur 34 permet de régler de manière précise les déclenchements d'acquisition du signal radiofréquence afin de convertir l'enveloppe du signal reçu en signal numérique par le convertisseur 32b.

La puce « Combi » 5 peut être soit alimentée par ses plots de contacts ISO/IEC 7816 Vdd et Vss, soit utiliser de l'énergie procurée par le champ sur ses plots d'interface La, Lb selon l'utilisation et le montage électronique de l'invention. La puce peut aussi être alimentée par une tension qui serait générée à l'image du champ RF ou par le circuit 16 lui-même qui serait alimenté par les contacts 2 d'un dispositif hôte.

L'avantage de cette dernière option est pour le composant 5 de voir son alimentation gérée par l'étage 16 en fonction de la présence ou non du champ et le cas échéant de réinitialiser la puce 5.

À ce stade, l'amplitude de tension VLab est au moins de 3.3 Vpp (Volts crête-crête). Cette valeur est nécessaire pour que la puce de l'exemple détecte l'horloge de 13,56 MHz et puisse extraire des données provenant du lecteur.

A titre d'exemple, le tableau suivant indique la tension requise par deux puces actuelles exemple P5CD072 de Philips / NXP ou 66CLX800 de la société Infineon pour détecter l'horloge et les données provenant de champ extérieur.

| Puce | Puce sans contact Vcc = 3v | Puce sans contact Vcc = 2,7v |
|---|---|---|
| Vmin (Vpp) | 3,48 | 3,53 |
| Vmax (Vpp) | 6,87 | 6,22 |
| Duty Cycle (%) | 7,7 | 7,7 |

Antenne de réception (fig. 5, 6).

La dimension de l'antenne de réception 7 est aussi large que possible dans la limite de la surface disponible dans l'objet. Dans le cadre d'une surface disponible sur une carte micro SD, les résultats ci-dessous ont été retenus. L'inductance est de préférence sélectionnée de façon à être accordée par un condensateur supplémentaire de faible valeur afin de limiter la taille du condensateur.

L'antenne de réception peut par exemple avoir une surface 5 x 5 mm$^2$ et comprendre 4 à 6 spires. L'antenne peut être réglée à 13,56 MHz avec un facteur de qualité Q de 10. Un circuit parallèle peut être sélectionné de manière à obtenir une tension maximale aux bornes du circuit d'antenne. Les caractéristiques suivantes d'antenne ont été sélectionnées avec le circuit équivalent de la figure 6 avec L : 663 nH et R : 1,59 K$\Omega$ ; C n'étant pas applicable.

Les performances de l'antenne mesurées avec une telle antenne avec le schéma équivalent de la figure 6 sont données dans la table ci-dessous.

Ls = 663 nH ; Rs = 1,59 K$\Omega$ ; C1 = 180 pF ;

C2 = 18 pF ; Rc = 270 K$\Omega$ ; Cp = 9,5 pF ; Rp = 1 M$\Omega$.

| Intensité du champ | Puce sans contact Vcc = 2,7v |
|---|---|
| 1,5 A/m | 1,01 Vpp |
| 4,5 A/m | 3,00 Vpp |
| 7,5 A/m | 5,09 Vpp |

La tension attendue avec cette antenne est supérieure à 1 Vpp (Volt crête à crête). Le champ minimum crée une tension supérieure à 1Vpp, pas assez pour la puce combi 5 de détecter le signal. C'est pourquoi, dans l'exemple de réalisation avec une carte micro SD, on a de préférence introduit un étage d'amplification. Cet étage d'amplification pour la réception de l'horloge est ici supérieur à 10 dB, le gain en tension étant égal à 3. Cette amplification peut ne pas être nécessaire dans d'autres circonstances ou d'autres puces.

Le niveau de sortie de l'étage de conditionnement 16 est compris entre 3 Vpp et 14 Vpp. Le gain peut être compris entre 5 et 20dB.

La coupure d'alimentation de la puce ou la fonction RESET peuvent être déclenchée aussi par tout moyen, tel un interrupteur dans le dispositif hôte ou sur le circuit d'alimentation de la puce. La puce se réinitialise automatiquement lors de sa mise sous tension.

Bande latérale et modulation (fig. 7-10).

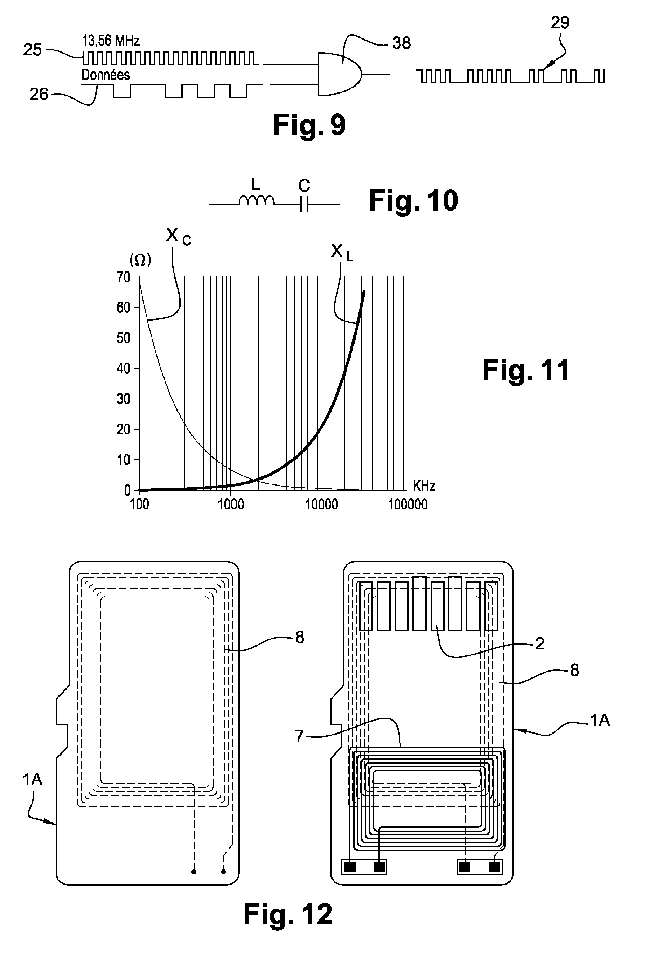

Dans l'exemple (fig. 9), lorsque la puce combi 5 reçoit le signal porteur (ou la porteuse) ainsi que le signal de données, par le biais de ses plots La /Lb, elle génère un signal de modulation de charge afin de transmettre une réponse au dispositif ou terminal en relation de communication avec elle. L'amplitude du signal de modulation Vmod est ici environ la moitié de l'amplitude de la porteuse VLAB lorsque le condensateur est bien adapté.

Un condensateur de 10 à 60pF aux bornes des points La, Lb de la puce peut être utilisé à cet effet. Cette valeur peut varier selon le type de puce. Ainsi on obtient les tensions VLAB et Vmod égales respectivement à 3,3 Volts crête-crête et à 1,6 Volts crête-crête.

À cette étape, deux options sont envisagées. La première plus simple est d'utiliser ce signal tel qu'il se présente puis, de préférence, de l'amplifier dans un étage d'amplification forte puissance avant d'injecter le signal dans un circuit d'adaptation ou d'activation de l'émission 17 avant l'antenne émettrice 8. Différents moyens d'amplification connus de l'homme de l'art peuvent être utilisés.

Dans un autre exemple (fig. 8) conforme à une seconde option, le signal porteur pour l'émission est supprimé afin de conserver les données numériques 25. A cet effet, on peut utiliser par exemple un filtre passe-bas 27 de la figure 8.

Par la suite (fig. 9), on effectue une modulation de préférence à 100 % par en combinant le signal de données 25 avec une porteuse 26 à 13,56 MHz. Ceci peut être réalisé à l'aide la porte (ET) logique 38 ou d'un tampon amplificateur 42 ou d'un montage à transistor réalisant la même fonction. Après une amplification de puissance, le signal obtenu 29 est utilisé pour alimenter l'antenne de sortie 8.

Ainsi, plutôt que d'amplifier l'ensemble comprenant la porteuse 25 et le signal 26 ou la porteuse seule 25 même quand il n'y a pas de signal, l'invention prévoit d'amplifier le signal et la porteuse uniquement lorsqu'il y a du signal de réponse. Par exemple, ici sur la figure 9 le signal 29 utile est amplifié quand le signal de donnée est à un niveau haut. Lorsqu'il n'y a pas de signal, (ligne de donnée à un niveau zéro ou proche de zéro), aucun signal ne sort de la porte 38. Il n'y a pas d'amplification et perte d'énergie inutile de la porteuse seule avant d'alimenter l'antenne d'émission.

La figure 4 illustre une option préférée de réalisation relativement simple permettant d'obtenir de bons résultats et mettant en oeuvre pour partie la seconde option; Selon cette option préférée, l'étage d'adaptation 17 comprend une porte logique « ET » 3 8 ou circuit équivalent pour combiner un signal de porteuse 26 (fig.9) et un signal de réponse 25 ou d'émission de la puce 5 avant amplification.

Plus en détail dans le circuit 17, le plot 'La' de la puce 5 est connecté à un démodulateur 39 (qui peut être du même type que le circuit 27 ou 32a) pour recevoir un signal de réponse modulé de la puce 5 ; Ensuite, la sortie du démodulateur 39 relie un comparateur 41 qui compare le niveau de tension reçue à un niveau de tension de référence (TRE) ceci afin de numériser le signal utile. La sortie du comparateur 41 portant le signal de réponse utile de la puce 26 se trouve branchée sur l'une des entrées du composant 38 réalisant la fonction 'ET' logique pour combiner le signal de porteuse 25 avec le signal de réponse 26 de la puce.

La porteuse 25 provient du point K de l'étage d'adaptation de réception et d'extraction 16A ou 16B ; La porteuse est injectée via une liaison à l'autre plot d'entrée du composant 38 réalisant la fonction 'ET' logique ; Le signal d'horloge est de préférence déphasé par un déphaseur 40 de manière à synchroniser ou caler de manière optimale les signaux d'horloge avec la porteuse du signal radiofréquence générée par un dispositif lecteur afin de produire une rétro-modulation maximale.

Le circuit 17 comprend de préférence un circuit tampon ou amplificateur 42 pour amplifier le signal 29 en sortie du composant 38 avant de l'injecter dans l'antenne d'émission 8. Le circuit d'antenne utilisé forme avec un condensateur 43 un circuit résonant série.

Certains composants de l'étage 17 peuvent de préférence être alimentés en tension, pour leur fonctionnement, par une source d'énergie provenant du dispositif hôte via les contacts 2. D'autres sources connues de l'homme de l'art ne sont pas exclues.

Le circuit 17 fonctionne comme ci-après. Après que la puce ait reçu sur ses points La, Lb des trames radiofréquences SRE de préférence reconditionnées au préalable, la réponse de la puce par modulation de charge est reçue et démodulée dans le démodulateur 39 ; Puis un signal utile est numérisé par le comparateur de seuil 41 avant d'être injecté dans le circuit (ET) 38 et combiné à une porteuse 25 extraite ou dérivée du champ reçu SRE provenant du point K. Le cas échéant, le circuit 17 peut comprendre un extracteur d'horloge similaire à 31 prélevant le signal comme aux figures 16A ou 16B.

Le signal de réponse 29 résultant du circuit 38 est ensuite amplifié de préférence par l'amplificateur 42 avant d'être injecté dans l'antenne émettrice à résonance série 8.

Puissance de l'amplification tampon de sortie.

De manière à compenser la faible surface de l'antenne émettrice dans la carte SD (ou autre substrat), on peut utiliser un amplificateur tampon de sortie 42 qui délivre de préférence un courant minimum allant de 60 à 80 mA sous la tension d'alimentation apportée. De bons résultats sont obtenus avec une puissance supérieure à 200 mW.

Un avantage de ce traitement est notamment de limiter la consommation d'énergie au niveau de l'amplification lorsqu'il n'y a pas de signal réponse de la puce 5. Il est en effet inutile d'amplifier le signal de la porteuse seul quand il n'y a pas de réponse ou de signal à émettre dans l'application envisagée.

Antenne de sortie & accord de fréquence (fig. 10, 11).

Les antennes 7, 8 comprennent dans l'exemple des spires disposées à plat sur un même substrat (ou deux substrats distincts) comme illustré sur les figures notamment 3 et 13. Tout moyen connu de réalisation d'antenne par l'homme de l'art peut être utilisé comme la gravure, l'incrustation de fil par ultrason, etc.

Lorsque le système est alimenté par une basse tension (3,3 V), l'antenne de sortie est conçue de manière à réaliser une résonance série. Lorsque le système est alimenté par un courant fort, la tension entre le circuit LC total sera relativement faible, quand une tension élevée est présente sur chaque composant L et C.

La courbe illustrée à la figure 11 représente des valeurs obtenues de réactance XL en fonction de l'inductance et ainsi des valeurs de réactance XC en fonction d'un condensateur selon la fréquence en application des formules ci-dessous.

$$X_C = \frac{1}{2 \cdot \pi \cdot f \cdot C} \qquad\qquad X_L = 2 \cdot \pi \cdot f \cdot L$$

Au point d'intersection entre les deux courbes, les réactances XL et XC sont égales. F est la fréquence de résonance série du circuit.

À ce point, la tension aux bornes du circuit LC (fig. 10) est minime quand l'intensité du courant est maximale. Comme le flux magnétique est directement dépendant de l'intensité du courant, cette résonance série est un moyen de créer un champ magnétique élevé sur l'antenne émettrice 8 bien qu'elle soit alimentée par une faible tension.

Cela constitue un moyen d'augmenter la puissance du signal du transpondeur 5 malgré la petite dimension de l'antenne sur le substrat.

Caractéristiques de l'antenne d'émission (fig. 12).

Selon le mode de réalisation de l'invention, le circuit comprend des antennes distinctes de réception et d'émission ; Les antennes sont agencées entre elles de manière que leur inductance mutuelle soit minime ou s'annule au moins en partie. De préférence, on choisit l'agencement de manière à avoir une induction de courant dans l'antenne de réception mimine notamment inférieure à au seuil du gain de l'étage de réception 16. Par exemple, avec un gain de 3 on prévoit d'agencer les antennes entre elles de manière à avoir une tension inférieure à 300 mV).

Par exemple, l'agencement d'antennes peut être effectué de manière à avoir une induction de courant dans l'antenne de réception inférieure dans les proportions de 1/100 à l'induction de courant qui serait générée par un lecteur émettant une niveau de champ de 1,5A/m.

Dans une variante (non représentée), les antennes sont protégées l'une de l'autre en étant écartées l'une de l'autre et/ou par blindage.

Dans une autre variante, les antennes se chevauchent et on prévoit des moyens électroniques de protection tels des filtres configurés pour éviter des perturbations mutuelles.

Dans le mode avantageux de réalisation, la dimension de l'antenne émettrice 8 est plus grande que l'antenne de réception. L'antenne est par exemple située sur le côté arrière de la μSD come illustrée à la figure 12. Ses caractéristiques utilisées dans l'exemple sont : L = 1,05 μH ; R = 939 Ω ; C = 2,69 pF.

Afin d'éviter la diaphonie entre les antennes du fait d'un couplage entre elles inévitable, on procède à un agencement des antennes de telle manière que l'inductance mutuelle entre les deux antennes soit réduite au minimum. Différentes solutions sont possibles notamment isoler une antenne par rapport à l'autre, désactiver une antenne pendant que l'autre est active et vis versa.

Selon un mode préféré, cette caractéristique de mutuelle induction minimisée est obtenue par un chevauchement ou superposition des deux antennes. L'antenne de réception 7 plus grande dans l'exemple est agencée de manière à avoir sensiblement une partie disposée en dehors de la périphérie externe de l'antenne d'émission ; De préférence l'antenne de réception 7 est sensiblement montée à cheval à moitié sur un côté et à l'intérieur de la périphérie de l'antenne d'émission 8 et à moitié en dehors de la périphérie de l'antenne d'émission.

Ainsi, grâce à cette disposition particulière, on a deux antennes dont la résultante de l'inductance mutuelle est globalement nulle ou du moins minimisée.

Lorsque l'antenne d'émission émet un champ électromagnétique, une partie du flux F traverse dans un sens X une partie A de l'antenne 7 située en regard de l'intérieur de l'antenne d'émission 8 générant un courant induit (i) dans l'antenne 7 ; En même temps, une autre partie du flux F traverse une partie B de l'antenne 7 située en dehors de la surface de l'antenne d'émission 8 dans un sens Y contraire à X générant un courant induit (j) contraire à (i).

Ainsi par un chevauchement partiel des antennes, on diminue au moins la valeur d'une perturbation provoquée par l'antenne émettrice 8 sur l'antenne réceptrice 7.

La perturbation induite dans l'antenne réceptrice par l'antenne émettrice s'annule d'elle-même au moins en grande partie. La résultante peut être sensiblement globalement nulle selon le positionnement adéquate des antennes et leurs caractéristiques.

L'efficacité d'une auto-annulation peut dépendre de l'environnement immédiat extérieur à l'antenne comme par exemple, l'environnement métallique d'un téléphone ou dispositif hôte de l'objet 1. Les antennes peuvent être sur une même face d'un substrat en étant isolée l'une de l'autre ou sur des faces opposées. Les antennes peuvent être aussi agencées sur des supports distincts parallèles entre eux.

L'invention peut prévoir de mettre en oeuvre des éléments suivants pour les avantages décrits :

- Des moyens de récupération ou d'extraction de la porteuse du champ magnétique reçu pour permettre une fonction active de modulation sans oscillateur avec des puces classique sans contact (non NFC) ;
- un agencement d'antennes séparées à mutuelle inductance nulle ou quasi nulle simplifiant le circuit ;
- La mise en oeuvre de deux sortes de résonance (de préférence de type parallèle pour la réception) et de préférence de type série pour l'émission pour une meilleure efficacité ;
- Un circuit d'adaptation de niveau 16 connecté à la puce 5 combi permettant l'usage des puces existantes, notamment les puces à interface duale (combi bancaire) qui sont déjà certifiées et sans aucune modification par simplification et par commodité industrielle ; En particulier, on prévoit l'usage de l'interface antenne La/Lb de la puce combi existante (notamment de la société Infineon SLE 66CLX800PE) pour moduler/démoduler ;
- En outre, l'invention s'affranchit du recours à une puce ou composant de type NFC avec notamment un oscillateur intégré. Par exemple, une puce sans contact répondant à la norme à la norme ISO/IEC 14443 et /ou ISO/IEC 15693 peut être utilisée.
- Le circuit peut comprendre un détecteur configuré pour fournir un signal représentatif de la présence d'un champ magnétique externe et déclencher un mode de fonctionnement parmi au moins un mode contact et mode sans-contact.
- En variante, l'une et/ou l'autre des antennes du circuit peut être déjà intégrée(s) dans un dispositif hôte, le circuit de l'invention sans les antennes venant simplement se brancher à l'une des antennes via un connecteur (non représenté) pour plus d'adaptabilité du circuit à des dispositifs hôtes.

Ainsi, l'invention prévoit tout dispositif ou appareil de communication comprenant le circuit décrit précédemment qu'il soit sous forme amovible ou pas.

L'invention peut concerner également tout dispositif comprenant une antenne émettrice et réceptrice distinctes l'une de l'autre. Ainsi par exemple, dans un encombrement réduit tel qu'une serrure de porte électronique à déclenchement radiofréquence. On prévoit, dans un mode de fonctionnement passif de la serrure, que cette dernière reçoit un signal radiofréquence émis par un lecteur tel un téléphone portable ou une clé portable émettrice.

Dans un autre mode de fonctionnement activé ou non, la serrure comprend une antenne émettrice agencée conformément à l'invention qui est apte à lire un transpondeur passif tel qu'une carte à puce sans contact, étiquette électronique RFID ou autre.

Grâce à l'agencement d'antenne de l'invention, l'émission d'un champ de lecture par l'antenne émettrice disposée à proximité de l'antenne réceptrice, induit un courant perturbateur résultant minimal voir nul ou quasi nul dans l'antenne de réception. Ainsi, l'agencement de l'invention permet d'annuler un effet néfaste d'induction entre les antennes sans ajout d'électronique ou moyens désactivant ou filtrant les signaux perçu par l'antenne de réception.

Les antennes peuvent également être agencées dans des plans non parallèles par exemple perpendiculaires. L'antenne réceptrice 7 peut notamment être située dans un plan proche d'une spire externe ou interne de l'antenne émettrice, le plan de l'antenne 8 croisant sensiblement une médiatrice de la surface de couplage de l'antenne réceptrice pour une atténuation optimale de la perturbation par l'antenne émettrice.

## Revendications

1. Procédé pour minimiser un courant perturbateur induit dans une antenne réceptrice (7) de champ électromagnétique, ledit champ étant généré par une antenne émettrice (8) située à proximité de ladite antenne réceptrice, **caractérisé en ce que** l'antenne réceptrice (7) est agencée par rapport à l'antenne émettrice (8) de manière que ledit courant induit s'annule au moins en partie dans l'antenne réceptrice.

2. Procédé selon la revendication précédente, **caractérisé en ce que** lesdites antennes (7, 8) sont agencées entre elles en étant partiellement en regard l'une de l'autre sur deux plans horizontaux sensiblement parallèles.

3. Procédé selon l'une quelconque des revendications précédentes, **caractérisé en ce que** les antennes (7, 8) se chevauchent, la moitié environ de la surface de couplage de l'antenne réceptrice recouvrant sensiblement la surface de couplage de l'antenne émettrice.

**4.** Procédé selon l'une quelconque des revendications précédentes, **caractérisé en ce que** l'antenne réceptrice chevauche l'antenne émettrice de manière que le courant (i) induit dans l'antenne réceptrice généré par un flux produit à l'intérieur de l'antenne émettrice soit sensiblement égal au courant contraire (j) induit dans l'antenne réceptrice généré par un flux de sens opposé produit à l'extérieur de l'antenne émettrice et reçu par une portion d'antenne réceptrice située à l'extérieur de l'antenne émettrice.

**5.** Agencement d'antennes émettrice et réceptrice de champ électromagnétique, lesdites antennes étant disposées à proximité l'une de l'autre, **caractérisé en ce que** l'antenne réceptrice est agencée par rapport à l'antenne émettrice de manière que le courant induit par l'antenne émettrice dans l'antenne réceptrice s'annule sensiblement au moins en majeure partie ou en quasi totalité.

**6.** Agencement d'antennes selon la revendication précédente, **caractérisé en ce que** lesdites antennes sont agencées entre elles en étant (7, 8) partiellement en regard l'une de l'autre sur deux plans horizontaux sensiblement parallèles.

**7.** Agencement d'antennes selon l'une des revendications 5 à 6, **caractérisé en ce que** l'une des antennes chevauche l'autre sur la moitié de sa surface de couplage.

**8.** Agencement d'antennes selon l'une quelconque des revendications 5 à 7, **caractérisé en ce que** les antennes sont agencées de manière que le flux électromagnétique de l'antenne émettrice traverse une première partie de surface de couplage de l'antenne émettrice dans un premier sens et un flux opposé traverse une seconde partie de la surface de couplage de l'antenne réceptrice dans un sens opposé au premier sens.

**9.** Agencement d'antennes selon l'une quelconque des revendications 5 à 8, **caractérisé en ce que** les antennes (7,8) sont disposées sur une même face d'un support ou sur des faces opposées.

**10.** Dispositif de communication radiofréquence mettant en oeuvre le procédé conforme à l'une quelconque des revendications 1 à 5 ou comprenant un agencement d'antennes conforme à une des revendications 5 à 9.

**11.** Dispositif de communication selon la revendication précédente, la communication étant du type sans-contact activée (1), le dispositif comprenant des moyens de réception et d'émission d'un champ électromagnétique véhiculant des données (5, 6, 7, 8) ladite émission étant synchronisée avec ladite réception, caractérisé en qu'il comprend une première antenne (7) de réception de données et une seconde antenne (8) d'émission de données conformes respectivement à l'antenne émettrice et réceptrice.

**12.** Dispositif de communication selon l'une quelconque des revendications précédentes, **caractérisé en ce qu'**il est intégré dans ou constitue un objet ayant un facteur de forme d'une carte à circuit intégré ou carte de type micro SD ou une montre.

Fig. 1

Fig. 2

Fig. 3A

Fig. 3B

Fig. 4

Fig. 5

| Antenne de Réception | | |
|---|---|---|
| L | 663 nH | |
| R | 1,59 KΩ | |
| C | NA | |

Fig. 6

Fig. 7

Fig. 8

Fig. 9

Fig. 10

Fig. 11

Fig. 12

Europäisches
Patentamt

European
Patent Office

Office européen
des brevets

**RAPPORT DE RECHERCHE EUROPEENNE**

Numéro de la demande

EP 11 30 5454

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2010/311328 A1 (KARGL WALTER [AT] ET AL) 9 décembre 2010 (2010-12-09) * abrégé; figures 5-6 * * page 4, alinéa 64-72 * ----- | 1,5, 10-12 | INV. H01Q1/22 |
| X | FR 2 923 324 A1 (COMMISSARIAT ENERGIE ATOMIQUE [FR]) 8 mai 2009 (2009-05-08) * abrégé; figure 3 * * page 1, ligne 1-25 * * page 11, ligne 1 - page 12, ligne 30 * ----- | 1,10 | |

**DOMAINES TECHNIQUES RECHERCHES (IPC)**

H01Q

Le présent rapport a été établi pour toutes les revendications

| Lieu de la recherche | Date d'achèvement de la recherche | Examinateur |
|---|---|---|
| Munich | 13 octobre 2011 | Cordeiro, J |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 30 5454

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-10-2011

| Document brevet cité au rapport de recherche | | Date de publication | Membre(s) de la famille de brevet(s) | | Date de publication |
|---|---|---|---|---|---|
| US 2010311328 | A1 | 09-12-2010 | DE 102010017202 | A1 | 05-01-2011 |
| | | | FR 2946464 | A1 | 10-12-2010 |
| | | | JP 2010283819 | A | 16-12-2010 |
| FR 2923324 | A1 | 08-05-2009 | EP 2218135 | A1 | 18-08-2010 |
| | | | WO 2009059997 | A1 | 14-05-2009 |
| | | | JP 2011503989 | A | 27-01-2011 |
| | | | US 2010297938 | A1 | 25-11-2010 |

EPO FORM P0460

Pour tout renseignement concernant cette annexe : voir Journal Officiel de l'Office européen des brevets, No.12/82

**EP 2 511 977 A1**

RÉFÉRENCES CITÉES DANS LA DESCRIPTION

**Documents brevets cités dans la description**

- EP 1801741 B1